# EUROPÄISCHE PATENTSCHRIFT

(11) **EP 1 792 787 B1**
(45) Veröffentlichungstag und Bekanntmachung des Hinweises auf die Patenterteilung: **04.08.2010**
(21) Anmeldenummer: 06022102.5
(22) Anmeldetag: 21.10.2006
(51) Int. Cl.: B60R 19/48

(54) **Vorrichtung zur Befestigung eines Ultraschallsensors an einer Kraftfahrzeugkarosserie**
Fixation device for an ultrasonic feeler on a vehicle body.
Dispositif de fixation d'un détecteur à ultrasons sur une carrosserie de véhicule

(30) Priorität: 01.12.2005 DE 102005058497
(43) Veröffentlichungstag der Anmeldung: 06.06.2007
(73) Patentinhaber: Valeo Schalter und Sensoren GmbH, 74321 Bietigheim-Bissingen (DE)
(72) Erfinder: Neft, Hubert, 71723 Grossbottwar (DE); Klein, Rudolf, 74348 Lauffen a.N. (DE)
(74) Vertreter: Pothmann, Karsten

(56) Entgegenhaltungen:
- EP-A- 1 083 099
- EP-A- 1 555 163
- DE-A1- 19 626 291
- DE-A1- 19 719 519
- US-B1- 6 203 366

## Beschreibung

Die Erfindung betrifft eine Vorrichtung zur Befestigung eines Ultraschallsensors an einer Fahrzeugkarosserie, mit einem in Einbaulage vorderen ringförmigen Abschnitt, an den sich ein rückwärtiger Abschnitt anschließt, der einen im Wesentlichen zylindrischen Hohlraum zur Aufnahme eines Ultraschallsensors bildet, wobei in dem rückwärtigen Abschnitt auf der dem ringförmigen Abschnitt gegenüberliegenden Seite ein Materialausschnitt zur Aufnahme eines zur Längsachse des Hohlraums in seitlicher Richtung abstehenden Steckerteils des Ultraschallsensors vorgesehen ist, wobei in dem rückwärtigen Abschnitt ein weiterer Materialausschnitt zur Aufnahme eines zur Längsachse des Hohlraums in seitlicher Richtung abstehenden Steckerteils des Ultraschallsensors vorgesehen ist.

Mit einer solchen aus der DE 197 19 519 A1 bekannten Vorrichtung kann ein Ultraschallsensor zuverlässig an einer Fahrzeugkarosserie befestigt werden. Der vordere, ringförmige Abschnitt liegt dabei an einem Träger an, beispielsweise an einer Stoßstangenverkleidung. Der Hohlraum, der von dem rückwärtigen Abschnitt gebildet wird, dient zur Anordnung des Ultraschallsensors. Mit Hilfe des Materialausschnitts ist es möglich, dass ein Steckerteil des Ultraschallsensors in einer zur Längsachse des Hohlraums seitlichen Richtung abstehen kann und in dem Materialausschnitt aufgenommen werden kann.

Aus der EP 1 083 099 A1 und aus der EP 1 555 163 A1 sind weitere Halteeinrichtung für einen Ultraschallwandler an einem Außenteil eines Kraftfahrzeuges bekannt.

Der vorliegenden Erfindung liegt die Aufgabe zugrunde, eine Vorrichtung zur Befestigung eines Ultraschallsensors an einer Fahrzeugkarosserie zu schaffen, die eine besonders einfache Montage des Ultraschallsensors ermöglicht.

Diese Aufgabe wird erfindungsgemäß durch eine Vorrichtung mit den Merkmalen des Patentanspruchs 1 gelöst.

Die erfindungsgemäße Vorrichtung ermöglicht es, einen Ultraschallsensor in zwei verschiedenen Drehlagen innerhalb der Vorrichtung anzuordnen. In einer ersten Drehlage dient ein erster Materialausschnitt zur Aufnahme eines Steckerteils des Ultraschallsensors, in einer zweiten Drehlage ein zweiter Materialausschnitt. Hierdurch ist es möglich, bei einer bereits an einer Fahrzeugkarosserie befestigten Vorrichtung die Drehlage des Ultraschallsensors zu beeinflussen, so dass das Steckerteil des Ultraschallsensors für eine Verlegung eines sich anschließenden Kabels günstig liegt. Zum anderen ist es möglich, dass die Vorrichtung und der Ultraschallsensor vormontiert werden, wobei der Ultraschallsensor und die Vorrichtung zwei unterschiedliche Drehlagen zueinander einnehmen können.

Dadurch, dass der rückwärtige Abschnitt der Vorrichtung zumindest in einem zu dem ringförmigen Abschnitt benachbarten Bereich spiegelsymmetrisch zu einer Symmetrieebene, in der sich die Längsachse des zylindrischen Hohlraums erstreckt, ausgebildet ist und um 180° zueinander versetzte Abflachungen aufweist, kann die Vorrichtung verdrehgesichert in zwei um 180° zueinander versetzten Winkellagen in einer Karosserieöffnung der Fahrzeugkarosserie befestigt werden, welche einander gegenüberliegende Begrenzungen aufweist. Die Vorrichtung kann also zwei verschiedene, um 180° zueinander verdrehte Relativlagen zur Fahrzeugkarosserie einnehmen. Auf diese Weise kann die Vorrichtung besonders schnell an der Fahrzeugkarosserie befestigt werden.

Nach einer Weiterbildung der Erfindung ist der Hohlraum im Wesentlichen kreiszylindrisch ausgebildet und somit besonders gut geeignet, einen im Wesentlichen kreiszylindrischen Ultraschallsensor in Umfangsrichtung zu schützen.

Wenn die Materialausschnitte symmetrisch zur Symmetrieebene angeordnet sind, kann die Vorrichtung an einer Fahrzeugkarosserie befestigt werden, ohne dass dabei bereits Sorge getragen werden muss, dass zumindest einer der Materialausschnitte eine korrekte Drehlage aufweist. Vielmehr ergibt sich durch die vorgeschlagene Symmetrie, dass die Vorrichtung relativ zur Fahrzeugkarosserie in einer beliebigen von zwei möglichen Relativlagen befestigt werden kann und dass der Ultraschallsensor relativ zur Vorrichtung dann ebenfalls in einer von zwei möglichen Relativlagen befestigt werden kann.

Eine bevorzugte Ausführung der Erfindung sieht vor, dass die Materialausschnitte U-förmig ausgebildet sind. Eine solche U-Form bietet dem Steckerteil des Ultraschallsensors Schutz und Halt.

Nach einer Weiterbildung der Erfindung ist die Außenseite des rückwärtigen Abschnitts im Wesentlichen zylindrisch, insbesondere kreiszylindrisch ausgebildet. Hierdurch können die Wandstärken des rückwärtigen Abschnitts im Wesentlichen konstant gehalten werden.

Eine bevorzugte Ausführungsform der Erfindung sieht vor, dass der rückwärtige Abschnitt auf seiner Außenseite und in Längsrichtung des Hohlraums gesehen mit den Materialausschnitten fluchtende Abflachungen aufweist. Diese Abflachungen dienen als Verdrehsicherung der Vorrichtung innerhalb eines Stanzlochs, das in der Fahrzeugkarosserie ausgebildet ist, um die Vorrichtung aufzunehmen.

In entsprechender Weise kann der rückwärtige Abschnitt in Umfangsrichtung des Hohlraums gesehen zwischen den Materialausschnitten angeordnete, ebene Wandabschnitte aufweisen. Auch diese Wandabschnitte können mit den Begrenzungen eines Stanzlochs der Fahrzeugkarosserie korrespondieren. Da die Vorrichtung zur Montage an der Fahrzeugkarosserie in das Stanzloch hineingeführt wird, kann somit bereits bei einem ersten Eintauchen der Vorrichtung in das Stanzloch eine zuverlässige Führung zur Montage der Vorrichtung in der Karosserieöffnung gewährleistet werden.

Nach einer alternativen Ausführungsform der Erfindung ist vorgesehen, dass in Umfangsrichtung des Hohlraums gesehen die Abflachungen und die ebenen Wandabschnitte eine gleiche Breite aufweisen. Hierdurch ist es sogar möglich, die erfindungsgemäße Vorrichtung in vier Drehlagen innerhalb einer Karosserieöffnung zu positionieren. Diese vier Drehlagen sind um 90° zueinander versetzt.

Die Abflachungen und die ebenen Wandabschnitte können aber auch in Umfangsrichtung des Hohlraums gesehen eine unterschiedliche Breite aufweisen. Hierdurch ist gewährleistet, dass sich die Vorrichtung in zwei möglichen Drehlagen relativ zur Fahrzeugkarosserie befestigen lässt. Wenn die Materialausschnitte wie oben beschrieben symmetrisch zur Symmetrieebene angeordnet sind, ergeben sich - unabhängig von der gewählten Drehlage der Vorrichtung zur Fahrzeugkarosserie - zwei mögliche Montagepositionen des Ultraschallsensors relativ zur Vorrichtung.

Nach einer Weiterbildung der Erfindung weist der rückwärtige Abschnitt in Längsrichtung des Hohlraums gesehen mit den ebenen Wandabschnitten fluchtende Rastkörper auf. Mit Hilfe dieser Rastkörper kann die Vorrichtung an einer Karosserieöffnung fixiert werden. Dabei hintergreifen die Rastkörper Abschnitte der Fahrzeugkarosserie, die eine Öffnung begrenzen, in der die Vorrichtung aufgenommen ist.

Nach einer vorteilhaften Weiterbildung der Erfindung ist in Umfangsrichtung des Hohlraums gesehen die Breite der flachen Wandabschnitte gleich der Breite der Rastkörper. Dies ermöglicht eine einfache und bruchstabile Anordnung der Rastkörper an dem rückwärtigen Abschnitt der Vorrichtung.

Eine weitere Ausführungsform der Erfindung sieht vor, dass in den ebenen Wandabschnitten umfangsseitig geschlossene Öffnungen ausgebildet sind. In diese Öffnungen können Rastnasen eingreifen, die an einer Außenfläche des Ultraschallsensors vorgesehen sind. Somit kann der Ultraschallsensor zuverlässig und gegen ein Herausziehen gesichert an der Vorrichtung befestigt werden.

Es ist besonders bevorzugt, dass der rückwärtige Abschnitt in einem eine Öffnung mit begrenzenden, dem vorderen Abschnitt der Vorrichtung abgewandten Bereich eine Anlaufschräge für eine an dem Ultraschallsensor ausgebildete Rastnase aufweist. Auf diese Weise ist es möglich, den Ultraschallsensor in einfacher Weise mit der Vorrichtung zu fügen, ohne dass dabei erhöhte Montagekräfte auftreten.

Weiterhin kann vorgesehen sein, dass sich an den vorderen, ringförmigen Abschnitt parallel zur Längsrichtung des Hohlraums erstreckende Stege anschließen, die den vorderen, ringförmigen Abschnitt und den rückwärtig Abschnitt miteinander verbinden. Auf diese Weise kann eine sehr stabile und dennoch leichte Vorrichtung geschaffen werden.

Schließlich betrifft die Erfindung eine Vorrichtung mit einem Ultraschallsensor.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. Dabei können die in der Zeichnung gezeigten sowie in den Ansprüchen sowie in der Beschreibung erwähnten Merkmale jeweils einzeln für sich oder in beliebiger Kombination erfindungswesentlich sein. In der Zeichnung zeigen:
- Figur 1: eine perspektivische Ansicht einer erfindungsgemäßen Vorrichtung;
- Figur 2: eine weitere perspektivische Ansicht der Vorrichtung gemäß Figur 1;
- Figur 3: eine Draufsicht der Vorrichtung gemäß Figur 1;
- Figur 4: eine in einer Fahrzeugkarosserie ausgebildete Montageöffnung;
- Figur 5: eine Seitenansicht der Vorrichtung bei Anordnung in der Montageöffnung gemäß Figur 4;
- Figur 6: eine gegenüber der Darstellung in Figur 5 um 90° verdrehte Seitenansicht.

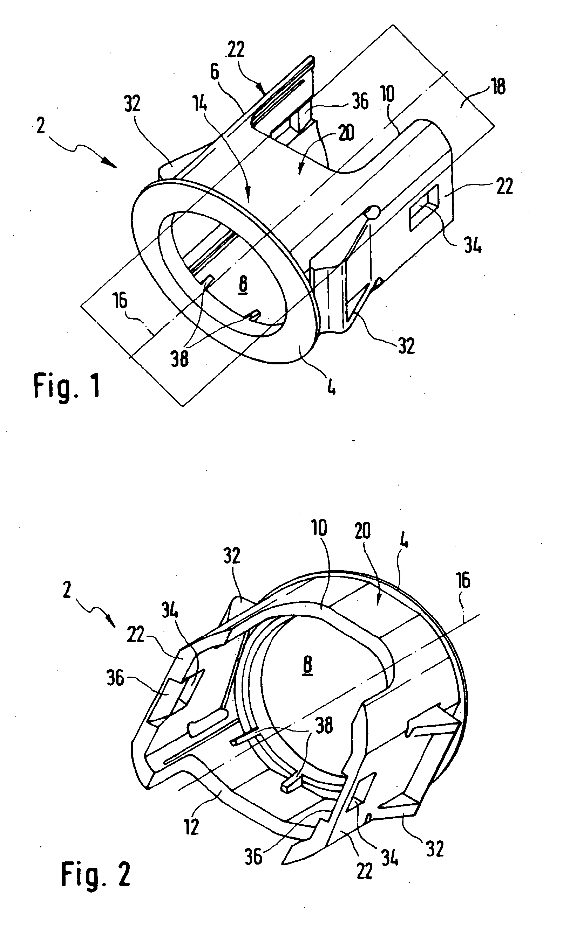

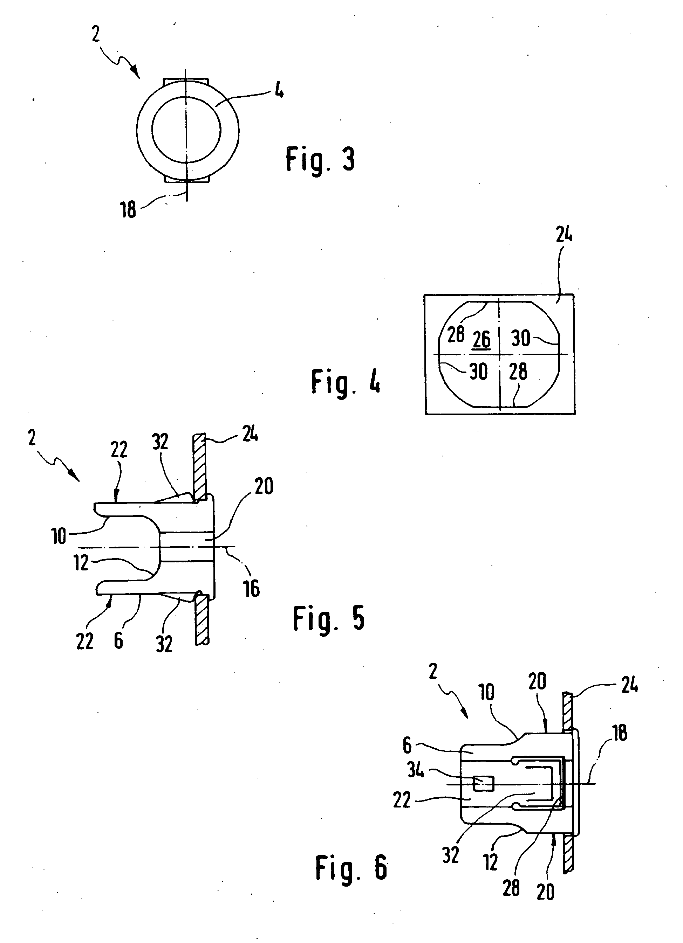

In Figur 1 ist eine Vorrichtung zur Befestigung eines Ultraschallsensors an einer Fahrzeugkarosserie insgesamt mit dem Bezugszeichen 2 bezeichnet. Die Vorrichtung weist einen vorderen, ringförmigen Abschnitt 4 auf, der auch in Figur 2 von seiner Rückseite her und in Figur 3 in einer Draufsicht dargestellt ist. An diesen Abschnitt 4 schließt sich ein rückwärtiger Abschnitt 6 an, der einen im Wesentlichen zylindrischen Hohlraum 8 zur Aufnahme eines nicht dargestellten Ultraschallsensors bildet.

Der Abschnitt 6 weist an seinem rückwärtigen, dem Abschnitt 4 abgewandten Ende einen ersten, U-förmigen Materialausschnitt 10 und einen zweiten, ebenfalls U-förmigen Materialausschnitt 12 auf (vergleiche auch Figur 2). Die Materialausschnitte 10 und 12 liegen einander gegenüber. In den Hohlraum 8 kann ein nicht dargestellter zylindrischer Ultraschallsensor eingesetzt werden, von dem in seitlicher Richtung ein Steckerteil abgeht, das in dem Materialausschnitt 10 oder in dem Materialausschnitt 12 aufgenommen werden kann.

Die Außenseite 14 des Abschnitts 6 ist so gestaltet, dass sie symmetrisch zu einer Symmetrieebene 18 ist, in der sich die Längsachse 16 des zylindrischen Hohlraums 8 erstreckt. Die Symmetrieebene 18 teilt also den Hohlraum 8 in zwei halbzylindrische Räume. Die Lage der Ebene 18 ist auch in den Figuren 3 und 6 dargestellt.

Das rückwärtige Teil 6 weist mit den Materialausschnitten 10 und 12 fluchtende Abflachungen 20 auf, die benachbart zu dem ringförmigen Abschnitt 4 angeordnet sind. Die Abflachungen 20 sind in Umfangsrichtung des Hohlraums 8 gesehen um 180° zueinander versetzt, dies gilt auch für die sich einander gegenüberliegenden Materialausschnitte 10 und 12.

In Umfangsrichtung des Hohlraums 8 um 90° zu den Abflachungen 20 winkelversetzt sind ebene Wandabschnitte 22 vorgesehen, die sich in Umfangsrichtung des Hohlraums 8 gesehen zwischen den Materialausschnitten 10 und 12 befinden.

Die Vorrichtung 2 kann mit einer in Figur 4 abschnittsweise dargestellten Fahrzeugkarosserie 24 verbunden werden, indem die Vorrichtung 2 mit seinem rückwärtigen Ende 6 in eine in Figur 4 dargestellte Montageöffnung 26 eingesetzt wird.

Die Montageöffnung 26 ist einer Kreisform angenähert, weist jedoch gerade Begrenzungsabschnitte auf. Dies sind längere, einander gegenüberliegende Begrenzungen 28 und um 90° hierzu winkelversetzte, kürzere geradlinige Begrenzungen 30.

Die Abflachungen 20 des rückwärtigen Abschnitts 6 der Vorrichtung 2 sind in Umfangsrichtung des Hohlraums 8 gesehen schmaler als die ebenen Wandabschnitte 22. Dementsprechend kann die Vorrichtung 2 nur dann in die Karosserieöffnung 26 eingesetzt werden, wenn die Vorrichtung 2 so relativ zur Karosserieöffnung 26 ausgerichtet wird, dass die Abflachungen 20 parallel zu den kürzeren Begrenzungen 30 und die ebenen Wandabschnitte 22 parallel zu den längeren Begrenzungen 28 angeordnet sind.

Ein Einsetzen der Vorrichtung 2 in die Karosserieöffnung 26 ist aufgrund der beschriebenen Symmetrie in zwei um 180° zueinander versetzte Winkellagen möglich.

Um die Vorrichtung 2 an der Fahrzeugkarosserie zu sichern, weist die Vorrichtung Rastkörper auf, die in dem rückwärtigen Abschnitt 6 integriert sind und in Längsrichtung des Hohlraums 8 gesehen mit den ebenen Wandabschnitten 22 fluchtend angeordnet sind.

Aus Figur 6 geht deutlich hervor, dass in Umfangsrichtung des Hohlraums 8 gesehen die Breite der Rastkörper 32 gleich der Breite der ebenen Wandabschnitte 22 ist.

In den ebenen Wandabschnitte 22 sind in etwa quadratische, in Umfangsrichtung geschlossene Öffnungen 34 vorgesehen. In diesen Öffnungen 34 können Rastnasen eines Ultraschallsensors aufgenommen werden, um den Ultraschallsensor in der Vorrichtung 2, das heißt innerhalb des Hohlraums 8, zu fixieren. Um das Einsetzen des Ultraschallsensors zu erleichtern, weist der rückwärtige Abschnitt in einem die Öffnung 34 begrenzenden Bereich, der dem vorderen Abschnitt 4 der Vorrichtung 2 abgewandt ist, eine Anlaufschräge 36 auf. Der Ultraschallsensor wird von dem rückwärtigen Abschnitt 6 her beginnend im Bereich der Anlaufschrägen 36 in den Hohlraum 8 eingeführt, bis seine Rastnasen mit den Öffnungen 34 in Eingriff gelangen.

Um der Vorrichtung 2 eine bessere Stabilität zu verleihen, sind Stege 38 vorgesehen, die den ringförmigen Abschnitt 4 und den rückwärtigen Abschnitt 6 stabilisierend miteinander verbinden (vergleiche Figur 1 und 2).

## Patentansprüche

1. Vorrichtung (2) zur Befestigung eines Ultraschallsensors an einer Fahrzeugkarosserie (24), mit einem in Einbaulage vorderen ringförmigen Abschnitt (4), an den sich ein rückwärtiger Abschnitt (6) anschließt, der einen im Wesentlichen zylindrischen Hohlraum (8) zur Aufnahme eines Ultraschallsensors bildet, wobei in dem rückwärtigen Abschnitt (6) auf der dem ringförmigen Abschnitt (4) gegenüberliegenden Seite ein Materialausschnitt (10) zur Aufnahme eines zur Längsachse (16) des Hohlraums (8) in seitlicher Richtung abstehenden Steckerteils des Ultraschallsensors vorgesehen ist, wobei in dem rückwärtigen Abschnitt (6) ein weiterer Materialausschnitt (12) zur Aufnahme eines zur Längsachse (16) des Hohlraums (8) in seitlicher Richtung abstehenden Steckerteils des Ultraschallsensors vorgesehen ist, **dadurch gekennzeichnet, dass** der rückwärtige Abschnitt (6) auf seiner dem Hohlraum (8) abgewandten Außenseite (14) zumindest in einem zu dem ringförmigen Abschnitt (4) benachbarten Bereich spiegelsymmetrisch zu einer Symmetrieebene (18), in der sich die Längsachse (16) des zylindrischen Hohlraums (8) erstreckt, ausgebildet ist und um 180° zueinander versetzte Abflachungen (20) aufweist, so dass die Vorrichtung verdrehgesichert in zwei um 180° zueinander versetzten Winkellagen in einer Karosserieöffnung (26) der Fahrzeugkarosserie (24) befestigbar ist, welche einander gegenüberliegende Begrenzungen (30) aufweist.

2. Vorrichtung (2) nach Anspruch 1, **dadurch gekennzeichnet, dass** der Hohlraum (8) im Wesentlichen kreiszylindrisch ausgebildet ist.

3. Vorrichtung (2) nach Anspruch 1 oder 2, **dadurch gekennzeichnet, dass** die Materialausschnitte (10, 12) symmetrisch zur Symmetrieebene (18) angeordnet sind.

4. Vorrichtung (2) nach mindestens einem der vorhergehenden Ansprüche, **dadurch gekennzeichnet, dass** die Materialausschnitte (10, 12) U-förmig ausgebildet sind.

5. Vorrichtung (2) nach mindestens einem der vorhergehenden Ansprüche, **dadurch gekennzeichnet, dass** die Außenseite (14) des rückwärtigen Abschnitts (6) im Wesentlichen zylindrisch, insbesondere kreiszylindrisch ausgebildet ist.

6. Vorrichtung (2) nach mindestens einem der vorhergehenden Ansprüche, **dadurch gekennzeichnet, dass** die Abflachungen (20) in Längsrichtung des Hohlraums (8) gesehen mit den Materialausschnitten (10, 12) fluchten.

7. Vorrichtung (2) nach mindestens einem der vorhergehenden Ansprüche, **dadurch gekennzeichnet, dass** der rückwärtige Abschnitt (6) in Umfangsrichtung des Hohlraums (8) gesehen zwischen den Materialausschnitten (10, 12) angeordnete, ebene Wandabschnitte (22) aufweist.

8. Vorrichtung (2) nach Anspruch 6 und 7, **dadurch gekennzeichnet, dass** in Umfangsrichtung des Hohlraums (8) gesehen die Abflachungen (20) und die ebenen Wandabschnitte (22) eine gleiche Breite aufweisen.

9. Vorrichtung (2) nach Anspruch 6 und 7, **dadurch gekennzeichnet, dass** in Umfangsrichtung des Hohlraums (8) gesehen die Abflachungen (20) und die ebenen Wandabschnitte (22) eine unterschiedliche Breite aufweisen.

10. Vorrichtung (2) nach mindestens einem der Ansprüche 7 bis 9, **dadurch gekennzeichnet, dass** der rückwärtige Abschnitt (6) in Längsrichtung des Hohlraums (8) gesehen mit den ebenen Wandabschnitten (22) fluchtende Rastkörper (32) aufweist.

11. Vorrichtung (2) nach Anspruch 10, **dadurch gekennzeichnet, dass** in Umfangsrichtung des Hohlraums (8) gesehen die Breite der ebenen Wandabschnitte (22) gleich der Breite der Rastkörper (32) ist.

12. Vorrichtung (2) nach mindestens einem der Ansprüche 7 bis 11, **dadurch gekennzeichnet, dass** in den ebenen Wandabschnitten (22) umfangsseitig geschlossene Öffnungen (34) ausgebildet sind.

13. Vorrichtung (2) nach Anspruch 10, **dadurch gekennzeichnet, dass** der rückwärtige Abschnitt (6) in einem eine Öffnung (34) mit begrenzenden, dem vorderen Abschnitt (4) der Vorrichtung (2) abgewandten Bereich eine Anlaufschräge (36) für eine an dem Ultraschallsensor ausgebildete Rastnase aufweist.

14. Vorrichtung (2) nach mindestens einem der vorhergehenden Ansprüche, **dadurch gekennzeichnet, dass** sich an den vorderen, ringförmigen Abschnitt (4) parallel zur Längsrichtung des Hohlraums (8) erstreckende Stege (38) anschließen, die den vorderen, ringförmigen Abschnitt (4) und den rückwärtigen Abschnitt (6) miteinander verbinden.

15. Vorrichtung (2) nach mindestens einem der vorhergehenden Ansprüche, umfassend einen Ultraschallsensor.

## Claims

1. Device (2) for fastening an ultrasonic sensor to a vehicle body (24), with an annular section (4) which is in front in the fitted position and is adjoined by a rear section (6) which forms a substantially cylindrical cavity (8) for receiving an ultrasonic sensor, wherein a material cutout (10) for receiving a plug part of the ultrasonic sensor, which plug part protrudes in the lateral direction with respect to the longitudinal axis (16) of the cavity (8) is provided in the rear section (6) on the side opposite the annular section (4), and wherein a further material cutout (12) for receiving a plug part of the ultrasonic sensor, which plug part protrudes in the lateral direction with respect to the longitudinal axis (16) of the cavity (8), is provided in the rear section (6), **characterized in that** the rear section (6), on the outer side (14) thereof facing away from the cavity (8), is designed mirror-symmetrically to a plane of symmetry (18), in which the longitudinal axis (16) of the cylindrical cavity (8) extends, at least in a region adjacent to the annular section (4), and has flattened portions (20) which are offset by 180° with respect to one another such that the device can be fastened in a manner secured against rotation in two angular positions, which are offset by 180° with respect to each other, in a body opening (26) of the vehicle body (24), which body opening has mutually opposite boundaries (30).

2. Device (2) according to Claim 1, **characterized in that** the cavity (8) is of substantially circular-cylindrical design.

3. Device (2) according to Claim 1 or 2, **characterized in that** the material cutouts (10, 12) are arranged symmetrically with respect to the plane of symmetry (18).

4. Device (2) according to at least one of the preceding claims, **characterized in that** the material cutouts (10, 12) are of U-shaped design.

5. Device (2) according to at least one of the preceding claims, **characterized in that** the outer side (14) of the rear section (6) is of substantially cylindrical, in particular circular-cylindrical design.

6. Device (2) according to at least one of the preceding claims, **characterized in that** the flattened portions (20) are flush with the material cutouts (10, 12), as seen in the longitudinal direction of the cavity (8).

7. Device (2) according to at least one of the preceding claims, **characterized in that** the rear section (6) has flat wall sections (22) arranged between the material cutouts (10, 12), as seen in the circumferential direction of the cavity (8).

8. Device (2) according to Claims 6 and 7, **characterized in that** the flattened portions (20) and the flat wall sections (22) have an identical width, as seen in the circumferential direction of the cavity (8).

9. Device (2) according to Claims 6 and 7, **characterized in that** the flattened portions (20) and the flat wall sections (22) have a different width, as seen in the circumferential direction of the cavity (8).

10. Device (2) according to at least one of Claims 7 to 9, **characterized in that** the rear section (6) has latching bodies (32) which are flush with the flat wall sections (22), as seen in the longitudinal direction of the cavity (8).

11. Device (2) according to Claim 10, **characterized in that** the width of the flat wall sections (22) is identical to the width of the latching bodies (32), as seen in the circumferential direction of the cavity (8).

12. Device (2) according to at least one of Claims 7 to 11, **characterized in that** openings (34) which are closed on the circumferential side are formed in the flat wall sections (22).

13. Device (2) according to Claim 10, **characterized in that** a region of the rear section (6) which bounds an opening (34) and faces away from the front section (4) of the device (2) has a run-on slope (36) for a latching lug formed on the ultrasonic sensor.

14. Device (2) according to at least one of the preceding claims, **characterized in that** the front annular section (4) is adjoined by webs (38) which extend parallel to the longitudinal direction of the cavity (8) and connect the front annular section (4) and the rear section (6) to each other.

15. Device (2) according to at least one of the preceding claims, comprising an ultrasonic sensor.

## Revendications

1. Dispositif (2) pour la fixation d'un détecteur à ultrasons sur une carrosserie de véhicule (24), avec une partie annulaire avant (4) en position de montage, à laquelle se raccorde une partie arrière (6), qui forme une cavité essentiellement cylindrique (8) pour le logement d'un détecteur à ultrasons, dans lequel il est prévu, dans la partie arrière (6) sur le côté opposé à la partie annulaire (4), une découpe de matière (10) pour le logement d'une pièce de connecteur du détecteur à ultrasons saillante en direction latérale par rapport à l'axe longitudinal (16) de la cavité (8), dans lequel il est prévu, dans la partie arrière (6), une autre découpe de matière (12) pour le logement d'une pièce de connecteur du détecteur à ultrasons saillante en direction latérale par rapport à l'axe longitudinal (16) de la cavité (8), **caractérisé en ce que** la partie arrière (6) est réalisée, sur son côté extérieur (14) situé à l'opposé de la cavité (8), au moins dans une région voisine de la partie annulaire (4), sous forme symétrique par rapport à un plan de symétrie (18) dans lequel s'étend l'axe longitudinal (16) de la cavité cylindrique (8) et présente des méplats (20) mutuellement décalés de 180°, de telle manière que le dispositif puisse être fixé sans rotation dans deux positions angulaires décalées de 180° l'une par rapport à l'autre dans une ouverture de carrosserie (26) de la carrosserie de véhicule (24), qui présente des limitations (30) mutuellement opposées.

2. Dispositif (2) selon la revendication 1, **caractérisé en ce que** la cavité (8) est de forme essentiellement cylindrique ronde.

3. Dispositif (2) selon la revendication 1 ou 2, **caractérisé en ce que** les découpes de matière (10, 12) sont agencées symétriquement par rapport au plan de symétrie (18).

4. Dispositif (2) selon au moins une des revendications précédentes, **caractérisé en ce que** les découpes de matière (10, 12) sont en forme de U.

5. Dispositif (2) selon au moins une des revendications précédentes, **caractérisé en ce que** le côté extérieur (14) de la partie arrière (6) est de forme essentiellement cylindrique, en particulier cylindrique ronde.

6. Dispositif (2) selon au moins une des revendications précédentes, **caractérisé en ce que** les méplats (20), vus dans la direction longitudinale de la cavité (8), sont en alignement avec les découpes de matière (10, 12).

7. Dispositif (2) selon au moins une des revendications précédentes, **caractérisé en ce que** la partie arrière (6), vue dans la direction périphérique de la cavité (8), présente des parties de paroi planes (22), disposées entre les découpes de matière (10, 12).

8. Dispositif (2) selon la revendication 6 et 7, **caractérisé en ce que**, vus dans la direction périphérique de la cavité (8), les méplats (20) et les parties de paroi planes (22) présentent la même largeur.

9. Dispositif (2) selon la revendication 6 et 7, **caractérisé en ce que**, vus dans la direction périphérique de la cavité (8), les méplats (20) et les parties de paroi planes (22) présentent une largeur différente.

10. Dispositif (2) selon au moins une des revendications 7 à 9, **caractérisé en ce que** la partie arrière (6), vue dans la direction longitudinale de la cavité (8), présente des corps d'encliquetage (32) en alignement avec les parties de paroi planes (22).

11. Dispositif (2) selon la revendication 10, **caractérisé en ce que**, vue dans la direction périphérique de la cavité (8), la largeur des parties de paroi planes (22) est égale à la largeur des corps d'encliquetage (32).

12. Dispositif (2) selon au moins une des revendications 7 à 11, **caractérisé en ce que** des ouvertures (34) fermées en périphérie sont réalisées dans les parties de paroi planes (22).

13. Dispositif (2) selon la revendication 10, **caractérisé en ce que** la partie arrière (6) présente, dans une région située à l'opposé de la partie avant (4) du dispositif (2) et limitant une ouverture (34), une rampe d'entrée (36) pour un taquet d'encliquetage réalisé sur le détecteur à ultrasons.

14. Dispositif (2) selon au moins une des revendications précédentes, **caractérisé en ce que** des ergots (38) s'étendant parallèlement à la direction longitudinale de la cavité (8) se raccordent à la partie annulaire avant (4), et relient l'une à l'autre la partie annulaire avant (4) et la partie arrière (6).

15. Dispositif (2) selon au moins une des revendications précédentes, comportant au moins un détecteur à ultrasons.
